(19) Europäisches Patentamt
European Patent Office
Office européen des brevets

(11) **EP 2 958 806 B1**

(12) **EUROPEAN PATENT SPECIFICATION**

(45) Date of publication and mention
of the grant of the patent:
**05.07.2017 Bulletin 2017/27**

(51) Int Cl.:
***B65B 25/04*** *(2006.01)*

(21) Application number: **14708116.0**

(86) International application number:
**PCT/NL2014/050115**

(22) Date of filing: **25.02.2014**

(87) International publication number:
**WO 2014/129904 (28.08.2014 Gazette 2014/35)**

(54) **METHOD AND SYSTEM FOR PACKAGING RESPIRING PRODUCE**

VERFAHREN UND SYSTEM ZUM VERPACKEN VON ATMENDEN NATURPRODUKTEN

PROCÉDÉ ET SYSTÈME D'EMBALLAGE DE PRODUITS RESPIRANTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.02.2013 NL 2010362**

(43) Date of publication of application:
**30.12.2015 Bulletin 2015/53**

(73) Proprietor: **Perfo Tec B.V.
3641 SG Mijdrecht (NL)**

(72) Inventors:
• **GROENEWEG, Bastiaan Rinke Antony
NL-3230 AG Brielle (NL)**
• **SCHROOT, Joyce Hendrika
NL-3230 AG Brielle (NL)**
• **DE BRUIN , Martijn Willem
NL-3230 AG Brielle (NL)**

(74) Representative: **De Vries & Metman
Overschiestraat 180
1062 XK Amsterdam (NL)**

(56) References cited:
**AT-B- 298 212          US-A- 4 842 875
US-A1- 2008 152 767    US-B1- 7 083 837**

**Description**

TECHNICAL FIELD

The present disclosure relates to packaging of respiring produce, in particular vegetables, fruits and/or herbs, more in particular vegetables, fruits and/or herbs that are minimally processed.

BACKGROUND

Natural produce such as vegetables, fruits and/or herbs tend to respire after being harvested. The respiration continues for prolonged periods, in particular if the produce has undergone little to no processing, e.g. having been washed and possibly peeled and/or chopped up, but otherwise fresh and uncooked. When such produce is packaged, the atmosphere within the package is affected by the respiring produce. Conversely, an atmosphere surrounding produce affects the respiration, maturation, aging and/or deterioration of the packed produce.

It has therefore become customary to package fresh produce in packages with a modified atmosphere (Modified Atmosphere Package or MAP) or with a controlled atmosphere (Controlled Atmosphere Package or CAP). In MAP the produce is packaged and an artificial gas mixture is used to establish a distinct interior atmosphere in the package, which may however change later on due to the respiration of the packed produce. In CAP the produce is packaged and the composition of the package atmosphere is controlled by including an active absorber for an atmosphere component, e.g. an oxygen scavenger or by adapting transmission of the packaging material to allow exchange with an exterior atmosphere outside the package. The latter option is preferentially done by providing packaging material with perforations, e.g. as disclosed in AT 298212, EP 0 351 115, WO 93/22207, US 4,842,875, US 6,441,340, US 6,730,874, WO 02/12068, US 2003/029850, US 7,083,837, WO 2006/063609, FR 2,873,992, US 2008/0152767, WO 2009/132663 and EP 1 935 787, and in scientific literature such as L. Jacxsens et al, "Validation of a systematic approach to design equilibrium modified atmosphere packages for fresh-cut produce", Lebensm. Wiss. u. Technol. 32:425-432 (1999), C. Sanz et al, "Quality of strawberries packed with perforated polypropylene", J. Food Sci. 64:748-752 (1999) and J.G. Kim et al, "Effect of initial oxygen concentration and film oxygen transmission rate on the quality of fresh-cut romaine lettuce", J. Sci. Food. Agric. 85:1622-1630 (2005).

Perforations in CAP packages are directed at controlling the oxygen concentration in the package atmosphere to a reduced oxygen concentration in order to slow down aging processes, but at the same time to ensure a minimum equilibrium oxygen concentration in order to prevent anaerobic processes such as bacterial growth. It is known that different species of produce exhibit different respiration rates and these are documented in literature, see the references above. The total surface area of the perforations is determined based on the produce to be packed and the transmission properties of the packaging material itself. However, it has been found that undesired or accelerated loss of quality still occur, leading to financial losses in the product supply chain to customers and/or dissatisfied consumers.

Therefore, further improvements are desired.

SUMMARY

Inter alia in view of the above, in an aspect, a method of packaging a batch of respiring produce according to claim 1 is herewith provided. The method comprises the steps of: providing a batch of the produce, determining a respiration characteristic of at least a portion of the batch for at least a first substance and a second substance wherein the first and second substances are selected from a list comprising $O_2$ and $CO_2$ and providing a packaging material for packaging produce from the batch.

The method further comprises determining a ratio between the determined respiration characteristics for the first and second substances and determining a desired transmission rate for a package of the packaging material containing an amount of produce from the batch and having a package atmosphere within the package wherein the desired transmission rate is the transmission rate for the first substance or the second substance and is determined based on said ratio to control a concentration of one of the first and second substances in the package atmosphere.

The present method provides an improved controlled atmosphere package, since it has been found by the applicant that respiration of produce is not, as customarily thought, only dependent on particular produce species, but is specific for each batch of produce. In particular, it has been found by the applicant that variations in crops due to seasonal effects, handling and/or transport, or even due to different locations on a field, may outweigh differences between species. As a result, the produce to be packed may exhibit a respiration characteristic that could lead to premature deterioration under traditional packaging conditions based on the type of produce, packaging material and perforation. Proceeding according to a general characteristic for respiration of a particular produce therefore provides false security and it is found that the traditional method of manufacturing packages based in such general characteristic may be a significant cause of faulty packages. The presently provided method addresses this issue and reduces risks of faultily packed and rapidly deteriorating produce by controlling the concentration of at least one of the substances, in particular the decisive substance for the produce development of the package, by restricting a value of the concentration and/or restricting a development of a concentration change.

For optimum working of the present method the proper transmission rate for the packaging material is established anew for each batch to be packed, in particular for subsequent batches of the same species of produce or the same combination of species, e.g. salad mixtures, fruit mixtures or vegetable mixtures comprising different species of salads, fruits and/or vegetables.

It is noted that the desired concentration of the first or second substance in the package atmosphere may be chosen for any given time during the expected or desired shelf life of the package, in particular with respect to a long time equilibrium value for particular storage conditions such as a particular temperature.

The method further may comprise providing one or more openings in the packaging material having an open area configured to establish said desired transmission rate. Openings allow for increasing the transmission rate of a poorly transmitting material, wherein the total open area may be determined by the number of openings and their respective open areas. Thus, a strong but poorly or non-transmitting material for the first and second substances may be used to advantage, e.g. a polymeric film.

The packaging material may have a first transmission rate for the first substance and a second transmission rate for the second substance, the open area for the first or second transmission rate should be determined with the first or second transmission rate, respectively, taken into account.

In an embodiment, the one or more openings may comprise microperforations having an open area of below 1 square millimetre, preferably below 0.5 square millimetre, e.g. about 0.25 square millimetre. Such microperforations facilitate exchange of gases through the packaging material, but hinder contamination of the packed material from outside sources. Laser perforation is an effective manner to provide such microperforations fast, reliable and in desired locations. They also tend not to significantly compromise integrity of the packaging material, in particular if the perforated packaging material comprises a polymeric film. Suitable films may range from a supple film to a rigid film for making a tray. A polymeric film may also be devoid of openings if the film itself has sufficient transmission to achieve the desired transmission rate.

In particular, the method may comprise, if said ratio is at or below a particular value, providing a first set of one or more openings in the packaging material having a first number of openings and a first open area, and if said ratio is above said particular value, providing a second set of one or more one or more openings in the packaging material having a second number of openings and a second open area, wherein the number of openings and the total open area of the first and second sets of openings, respectively, are selected to provide the determined transmission rate to control a concentration of the first or second substance, respectively, in the package atmosphere.

Generally it is held that the ratio H of respirations is about constant for each species, and for calculation of packaging transmission rates traditionally the ratio of $CO_2$ respiration [resp $CO_2$] and $O_2$ respiration [resp $O_2$]; $H(CO_2/O2) = $ [resp $CO_2$] / [resp $O_2$] is assumed to be about 1, so that oxygen consumption and carbon dioxide production of produce occur at about an equal rate. Thus, in order to establish a particular oxygen concentration in the package atmosphere, e.g. $O_2$ concentration < 4%, e.g. < 2% such as 0,5-1%, a particular Oxygen Transmission Rate (OTR) should be established, which would also govern a concentration of carbon dioxide within the package atmosphere.

However, due to extensive measurements on numerous crops, it has appeared that the aforementioned variations may cause the respiration ratio $H(CO_2/O_2)$ to vary significantly, even up to $H(CO_2/O_2)$ well over 4. Probable causes are environmental influence during growth (weather, soil composition, pests, pesticides, herbicides, etc.) and/or harvest and post-harvest treatment (transportation methods and speed, storage conditions, pre-packaging processing techniques, hygiene, etc.). In such case, a package atmosphere may equilibrate at a significantly too high $CO_2$ concentration with respect to the $O_2$ concentration which in turn increases risk of quality loss processes on the produce, such as loss of colour, odour, taste and/or microbiological quality and/or anaerobic decay processes. Thus, the $CO_2$ concentration development in the package atmosphere may be decisive for the product condition, rather than the $O_2$ concentration as traditionally believed. Similar may hold for water, ethylene and/or other atmospheric constituents.

According to the presently provided method a decisive respiration characteristic and the corresponding packaging material transmission rate to control the effects of that respiration rate to a desired value are determined and the package or at least the packaging material is accordingly provided.

The first and second sets of openings may be predetermined and application of the first or second set is determined by the determined ratio H. E.g. when $H(CO_2/O_2)$ < 3, e.g. $H(CO_2/O_2)$ < 1.5 a set of openings is provided for establishing an oxygen concentration and when $H(CO_2/O_2)$ larger than that value, a set of openings is provided for establishing a carbon dioxide concentration in the package atmosphere. The proper ratio may be selected depending on the particular produce. It is noted that generally for oxygen transmission control the total open area of the opening(s) is relatively small and the opening(s) primarily act as $O_2$-entries, whereas for carbon dioxide control the total open area tends to be relatively larger and the opening(s) primarily act as $CO_2$-exits.

In an aspect, and in particular for the method described hereinbefore, a method of determining a respiration characteristic of at least a portion of the batch for at least a first substance and a second substance, wherein preferably the first and second substances are selected from a list comprising $O_2$ and $CO_2$, and preferably also comprising determining a ratio between the determined respiration characteristics for the first and second substances, comprises determining the respiration characteristic of one or more portions of the batch for the first substance and the second substance at plural temperatures, preferably three or more different temperatures, preferably such that two of the plural temperatures differ by at least 10 degrees Celsius.

This enables establishment of a factor for the respiring produce by which the consumption or production of a particular respiration substance differs for a 10 degrees Celsius increase in temperature given by:

$$Q_{10} = (R_2 / R_1)^{10/(T_2 - T_1)}$$

wherein $Q_{10}$ is the (unitless) factor by which the reaction rate increases when the temperature is raised by ten degrees, $R_1$ and $R_2$ are the measured reaction rates at temperatures $T_1$ and $T_2$, respectively (where $T_1 < T_2$). Note that $R_1$ and $R_2$ should have the same unit. The temperature unit is Celsius or Kelvin. $T_1$ and $T_2$ do not need to be exactly 10 degrees apart.

Generally, the $Q_{10}(i,j,...)$ values for each measured species are equally relevant. However for specific species and/or batches, one $Q_{10}$ factor may be more relevant, e.g. $Q_{10}(CO_2)$ for $CO_2$ production, or $Q_{10}(O_2)$ for $O_2$ consumption.

Determination of the $Q_{10}$ factor for at least one of the first and second substances, preferably both substances, e.g. $Q_{10}(CO_2)$ and/or $Q_{10}(O_2)$, facilitates predicting development of (the respective concentrations in) the package atmosphere when the package is stored at different temperatures. Therefore it facilitates an informed selection of the desired transmission rate so that the package atmosphere is reliably maintained or improved.

The determination of the respiration at different temperatures may be performed on a single portion of the batch or a plurality of portions, the latter facilitates accelerating the method by concurrent measuring plural portions.

The method may further comprise forming a package of an amount of the packaging material for containing an amount of produce from the batch and having a package atmosphere, wherein preferably the package contains an amount of produce from the batch.

The method may thus be integrated in manufacturing of packages for the produce and/or producing packaged produce.

Such method may comprise providing the package with a gas and/or a substance to modify the package atmosphere, e.g. rendering the package as a Modified Atmosphere Package (MAP) and/or provide the package with a scavenger for one or more substances such as oxygen, ethylene and/or carbon dioxide. Thus, enhanced control over the package atmosphere, in particular in the initial period of the storage life may achieved.

It is noted that for determining the transmission rate various factors may be relevant and taken into consideration, e.g. the amount of produce to be packed, the surface area of the packaging material, or at least that surface area that is available for transmission of the substances under consideration, the presence of an initial atmosphere and/or a scavenger etc.

In an aspect, the method comprises determining a ratio between the determined respiration characteristics for the first and second substances, and determining based on said ratio a desired transmission rate of a package of the packaging material containing an amount of produce from the batch and having a package atmosphere within the package wherein the desired transmission rate is determined to control a concentration of one of the first and second substances in the package atmosphere. The method further comprising providing a user with a selection option to provide a first set of one or more openings in the packaging material having a first number of openings and a first open area, or a second set of one or more one or more openings in the packaging material having a second number of openings and a second open area, wherein the number of openings and the total open area of the first and second sets of openings, respectively, are selected to provide the determined transmission rate to control a concentration of the first or second substance, respectively, in the package atmosphere. The method further comprises providing the first or second set of openings in the packaging material depending on the selection option selected by the user.

Thus, the user can make an informed decision about the expected development of the package atmosphere and manners to control it. E.g., based on experience about conditions for transport, storage, display, and/or turnover, the user may decide to opt for controlling the transmission rate with respect to an, at first sight, sub-optimal condition which may however be optimal for the packaged produce given other considerations.

With the aforegoing in mind, a system according to claim 9 is herewith provided comprising a device configured to determine a respiration characteristic of at least a portion of a batch of respiring produce for at least a first substance and a second substance wherein the first and second substances are selected from a list comprising $O_2$ and $CO_2$. The system further comprises a device configured to determine a ratio between the determined respiration characteristics for the first and second substances, and a device configured to determine a desired transmission rate for a package of a packaging material containing an amount of produce from the batch and having a package atmosphere within the package, wherein the desired transmission rate is determined based on said ratio to control a concentration of one of the first and second substances in the package atmosphere.

Such system facilitates providing a package with an improved produce quality and/or shelf life.

In an embodiment, the system is configured to determine the respiration characteristic of one or more portions of the batch for the first substance and the second substance at plural temperatures, preferably three or more different temperatures, preferably such that two of the plural temperatures differ by at least 10 degrees Celsius, e.g. the system comprising one or more temperature controllable measuring volumes.

Hence the system facilitates determining the $Q_{10}$ for the produce on the basis of which further improved produce packaging may be achieved.

In an embodiment, the system may comprise a device configured to determine the open area of one or more openings to be made in a selected packaging material, preferably a polymeric film, for forming a package to package an amount of produce from the batch with said desired transmission rate. This may include determining a number of a plurality of openings, e.g. microperforations, and the (average) open area per opening to determine a total open area for the desired transmission rate. For this, the device may take specific transmission rates for the first and/or second substances, respectively of the packaging material into account.

In an embodiment, the system may comprise a perforator configured to provide one or more openings in a packaging material, the one or more openings providing an open area to provide the packaging material with the desired transmission rate. In a particular embodiment, the openings comprise microperforations, having an open area per opening of 1 square millimetre or less.

The perforator may provide an energetic beam to perforate the packaging material, e.g. one or more electric discharges such as arcs but preferably comprising a laser such as a $CO_2$ laser, a solid state laser or a diode laser.

The packaging material may comprise a polymeric film.

In an embodiment, the system may comprising a device configured to form a package of an amount of the packaging material for containing an amount of produce from the batch and having a package atmosphere. Preferably, the package contains the amount of produce.

Thus, an integrated packaging system is provided that can determine respiration characteristics of a batch of produce and package the batch to optimum conditions with respect to the package atmosphere.

In an embodiment the system is an integrated assembly.

In an embodiment, the system may comprise a fluorescence detector for at least one of the first and second substances, in particular oxygen. Such detectors tend to be reliable, fast and of relatively simple construction compared to traditional detectors and do not, or at least not significantly, affect the atmosphere which they are set to sample, so that accurate readings may be obtained. E.g., a suitable oxygen detector could be a commercially available OxySense® Gen III-P detector.

BRIEF DESCRIPTION OF THE DRAWINGS

The above-described aspects will hereafter be more explained with further details and benefits with reference to the drawings showing an embodiment of the invention by way of example.

 Fig. 1 indicates determination of a decisive respiration rate;
 Fig. 2 indicates a method of packaging a batch of produce;
 Fig. 3 indicates a system for packaging produce;
 Fig. 4 indicates another embodiment of a system for packaging produce.

DETAILED DESCRIPTION OF EMBODIMENTS

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified. Further, elements that are at least substantially identical or that perform an at least substantially identical function are denoted by the same numeral.

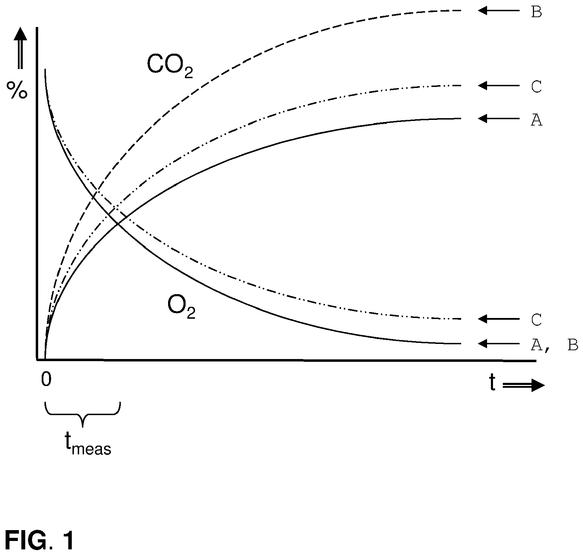

Fig. 1 indicates determination of a decisive respiration rate. The graph indicates exemplary development of $CO_2$- and $O_2$- concentration (abcissa) over time (ordinate); when respiring produce is held in an enclosed volume the produce consumes oxygen from the atmosphere in the volume and produces carbon dioxide into the atmosphere; the so-called $O_2$ and $CO_2$ respirations, respectively. Starting from normal environmental air with about 21% $O_2$ and 0.04% $CO_2$ (volume percentages), the concentration of $O_2$ will decrease, possibly down to about 0.1%, and the concentration of $CO_2$ will increase, possibly up to about 21%, in the atmosphere of the enclosed volume. If the consumed oxygen is replenished to some extent by direct addition, by chemical means and/or via suitable openings to an outside atmosphere, an equilibrium gas composition may set in after some time (full lines up/down to levels A) and for some period until other long-term decay processes occur which we will further neglect.

If, as traditionally held, the ratio of the $CO_2$ and $O_2$ respirations is about 1, i.e. $O_2$ consumption is equal to $CO_2$ production, controlling the $O_2$ replenishment amounts to controlling $CO_2$ respiration.

An equilibrium $O_2$ concentration below 7%, in particular about 2-4% is generally considered acceptable for suppressing respiration but still preventing anaerobic processes. An equilibrium CO2 concentration up to about 20% is considered acceptable for most types of produce.

However, if for some reason, e.g. due to microbial growth, the $CO_2$ production of the produce is significantly increased (dashed line up to level B), so that the ratio $H(CO_2/O_2) > 1$ the volume atmosphere may become

effectively "poisoned" by $CO_2$ even if still containing a proper low $O_2$ concentration (conditions as before, full line down to level B), and processes occurring in the produce and/or on the produce surface (e.g. caused by microbial organisms) may be promoted, leading to product deterioration. Oxygen regulation alone cannot help against this and $CO_2$ scavengers to counteract excess $CO_2$-formation may be difficult to dose and/or are expensive.

Similar problems and effects may arise if the concentration of another substance, e.g. ethylene, in the atmosphere would become too high or too low.

Herewith (in this example) it is provided that a ventilation channel for the $CO_2$ is increased so that the excess $CO_2$ may exit the package and an acceptably lower equilibrium level is established in the volume (dash-dotted line up to level C). As a consequence the $O_2$ concentration in the package may be higher than ideal (dash-dotted line down to level C) but as long as the $O_2$ concentration is reduced compared to the outside atmosphere, in particular if reduced to below 7%, the effect is still a decreased $O_2$ respiration and an extended produce quality and the resulting package is significantly better than if only $O_2$ respiration were taken into account.

As the respiration rates for $CO_2$, $O_2$ (and other substances) tend to be highly temperature-dependent, determining the $Q_{10}$ factor for the relevant substances (here: $CO_2$ and $O_2$) allows to determine, e.g. based on expected transport and storage conditions, if and when the ratio of the respirations may become critical for undesired maturation or other development of the considered batch of produce. Thus, the proper transmission rate for (the packaging material of) the package to be made may be determined and/or additional advice regarding transport and storage conditions may be provided to the respective responsible persons.

The $CO_2$ and $O_2$ respiration rates and the ratio between them may be detected already from the very first moments of the atmospheric development by fitting the onsets of the concentration development curves within a measurement duration $t_{meas}$ as shown in Fig. 1, e.g. wherein $t_{meas}$ of may be a few hours, whereas total equilibrium may be achieved only after several days.

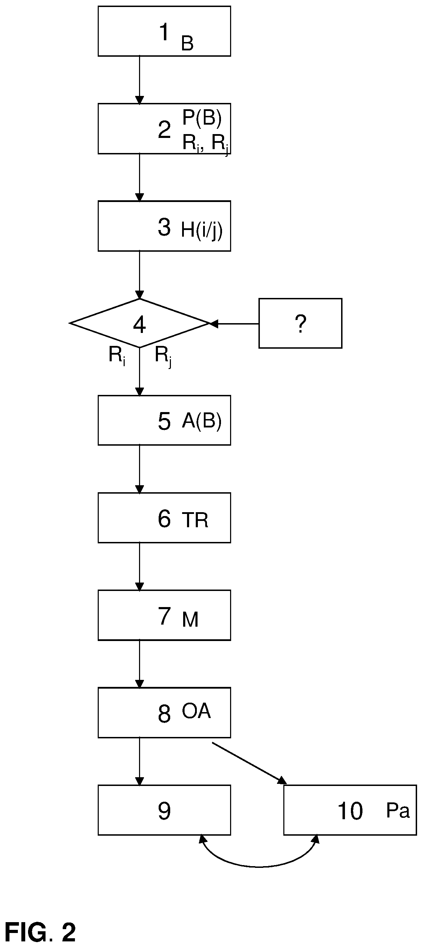

Fig. 2 schematically indicates an exemplary method of packaging a batch of respiring produce, comprising the steps of:

Step 1: provide a batch B of the produce,
Step 2: provide a portion P(B) of the batch B, which may comprise the entire batch but a sample suffices, and determine a first respiration characteristic $R_i$ of the batch for a first substance i and a second respiration characteristic $R_j$ for a second substance j. Determining a respiration characteristic may comprise measuring a variation of a concentration of the substance in an enclosed atmosphere. A characteristic may be expressed in any suitable manner as known in the art, e.g. as a number, a relation and/or a factor therein. Theoretical curves, e.g. exponential relations, may be fitted against the measured variation for control and/or extrapolation to expected further behaviour. The respiration characteristics $R_i$, $R_j$ may be determined at one temperature T or preferably at different temperatures $T_u$, $T_v$, $T_w$, ... so that the $Q_{10}$ value may be determined.

Step 3: determine a ratio H(i/j) between the determined respiration characteristics $R_i$, $R_j$ for the first and second substances i, j. The determined ratio may be a direct ratio or may comprise on or more weight factors.

Step 4: Determine which of the respiration characteristics $R_i$, $R_j$ is (to be) decisive for the quality of the desired produce package. This may be a direct consequence of the outcome of step 3 or comprise an act of selection (see question mark in Fig. 2).

Step 5: determine an amount A(B) of produce from the batch to be packed in the packaging material, e.g. in weight and/or volume. Preferably, expected storage conditions of the package to be made are also determined (temperature, environmental atmosphere and/or pressure, other constraints, etc).

Step 6: determine a desired transmission rate TR of a package of a packaging material containing the amount of produce from the batch and having a package atmosphere within the package, based on the results of steps 3-5. The desired transmission rate is determined based on said ratio (steps 3-4) to control a concentration of one of the first and second substances i, j in the package atmosphere and establish a desired package atmosphere and/or rate of change of the package atmosphere. Suitable calculation theorems may be found in the references cited supra, to be used with respect to the specific substance ($O_2$, $CO_2$, ...).

Step 7: select a packaging material M, e.g. a polymer film, for packaging produce from the batch. The packaging material may have a first material transmission rate $MTR_i$ for the first substance i and a second material transmission rate $MTR_j$ for the second substance j, which may differ.

Step 8: determine, based on the results of steps 6 and 7 the open area OA of one or more openings to be made in the packaging material M for forming a package to package the amount A of produce from the batch with said desired transmission rate TR. Again, suitable calculation theorems may be found in the references cited supra, to be used with respect to the specific substance ($O_2$, $CO_2$, ...).

Step 9: provide the packaging material and perforate it to make the openings according to the result of step 8. Preferably, the perforations are microperforations.

Step 10: form a package Pa of an amount of the packaging material of step 9 for containing an amount of produce from the batch and having a package atmosphere.

The package may be made and filled in a subsequent step, or the package may be made and filled in a combined process such as by forming the package around the amount of produce. During and/or after formation of the package an atmosphere modifying agent may be included e.g. a particular (combination of) substance(s).

It is noted that the steps listed above need not all be taken in the listed order; e.g. providing the batch, selecting the packaging material and/or providing the packaging material may be done at different times and/or at different locations, steps 9 and 10 may be performed in any order and/or concurrently. Calculations to determine the various parameters such as the respiration rates $R_i$, $R_j$, the ratio $H(i,j)$, the transmission rate TR, the total open area OA of perforations and/or the number and respective open areas of perforations to be made into the packaging material to achieve that total open area OA, may be made by one calculator, e.g. a computer, or a plurality of computers operating on data provided in a previous method step. Such plurality of computers may be separate but preferably they are connected directly and/or via the internet, possibly in a client-server relationship.

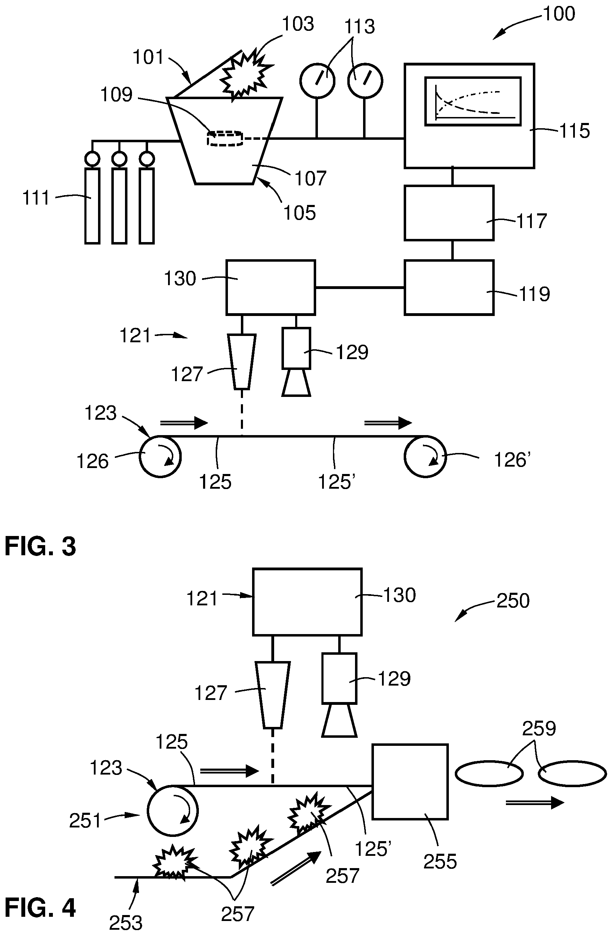

Fig. 3 shows a system 100 for performing the method of Fig. 2. The system comprises a device 101 being configured to determine a respiration characteristic of a portion 103 of a batch B of respiring produce for a first and a second substance, e.g. $O_2$ and $CO_2$. The device 101 comprises a respiration meter 105 having a closable receptacle 107 to provide an enclosed volume, one or more sensors 109 within the enclosed volume, a gas supply system 111 so as to provide a controllable atmosphere within the enclosed volume, e.g. for flushing the volume, establishing a particular total pressure and/or a particular initial atmosphere such as for mimicking a MAP, and optional data outputs 113. A ventilation system, a temperature controller and/or other features may be included as well. The respiration meter 103 is coupled with a controller 115 configured to readout the sensor(s) 109 and/or data output(s) 113 and to determine respiration characteristics $R_i$, $R_j$, ... for two or more substances and a ratio $H(i,j)$, $H(i,...)$, $H(j,...)$ between them. Plural respiration meters may be connected to the controller 115, e.g. for measuring under different conditions such as at different gas pressures, initial atmospheres, and/or temperatures and/or for measuring respiration rates of different batches of produce concurrently. The controller 115 may comprise a computer and/or may be programmable. Here the controller 115 comprises an optional display 116 to indicate measured data and other information.

The system 100 comprises a device 117 which is configured to determine the desired transmission rate TR for a package Pa of a packaging material M containing an amount A(B) of produce from the batch and having a package atmosphere within the package. The device 117 may be a stand-alone device or be integrated in the controller 115, e.g. being an add-on or a particular program that can be executed on the controller 115. It is possible that the controller 115 and the device 117 are remote and not directly connected, e.g. being connectable via the internet. The controller 115 may produce one or more data files and the device 117 may be configured to read the one or more data files and calculate the desired transmission rate, possibly requiring user input regarding further relevant information such as the amount of produce to be packaged, characteristics of the packaging material, storage temperatures, desired minimum shelf life, etc.

The system 100 comprises a calculator 119 configured to determine the open area OA of one or more openings to be made in the selected packaging material M for forming a package Pa to package the amount A(B) of produce from the batch B with said desired transmission rate TR.

The system 100 further comprises a perforator 121 configured to provide one or more openings in a packaging material 123, e.g. provided as web 125 on a reel 126. The perforator 121 comprises a laser beam generator 127 and an optional camera 129 connected to a controller 130. The web 125 of packaging material 123 is run through the perforator 121 and at desired locations the laser 127 is operated to microperforate the web 125 with the laser beam. The locations of the perforations on the web may be selected to lie in predetermined portions of a package to be made from the web so that the openings will not be occluded by prints, stickers and/or seals, etc. This may be achieved by operating the perforator and the web based on (machine-)detectable indicia on the web and/or other processes effected on the web such as cutting, sealing, printing, etc. The camera 129 may be used for quality control of the perforations and/or for determining a number of perforations (still) to be made in (the predetermined portion of the packaging material 123 that is to become) the package in order to achieve a desired total open area to provide the packaging material with the desired transmission rate.

The calculator 119 may be integrated in the controller 115, the device 117 and/or (the controller 130 of) the perforator 121, e.g. being an add-on or a particular program that can be executed on the controller 115, the device 117 and/or the perforator 121.

In Fig. 3 the perforator is of the reel-to-reel type, wherein packaging material 123 is provided as a web 125 on a reel and after perforation the perforated web 125' is again stored on a reel 126' for later use. It is also possible to cut the web into portions of perforated packaging material and/or to feed the perforator with portions of unperforated packaging material (not shown).

In Fig. 4 part of another embodiment is shown, which is otherwise generally similar to the system 100 of Fig. 3. Here, the perforator 121 is integrated in a packaging assembly 250, comprising a packaging material supply system 251, the perforator 121, a produce supply system 253 and a packager 255. The packaging material supply system 251 is similar to the embodiment of Fig. 3 and provides a web 125 of the packaging material 123 to be perforated by the perforator 121. The produce supply system 253 provides determined amounts 257 of produce to be packed, taken from the batch under consideration. The packager 255 combines the perforated packaging material 125' and the amounts of produce 257 and forms these into the desired packages 259 containing the produce (transportation and/or storage system such as conveyor, not shown). The packager 255 may comprise a tray sealer, a bag forming machine, etc., and may comprise further inputs such as trays, labels, closures, additives etc. to be integrated into the packages 259.

The above described embodiments can be varied in a number of ways within the scope of the claims. For instance, the packager 259 may be connected with a gas handling system for producing MAP packages. Other substances than oxygen and/or carbon dioxide may be relied on. For a large batch it may be advisable to determine respiration rates at several times during the process of packaging the batch, so that possible variations due to aging of the batch may be taken into account.

With some modifications, one skilled in the art may extend the embodiments described herein to other architectures, networks, or technologies.

One embodiment of the disclosure may be implemented as a program product for use with a computer system. The program(s) of the program product define functions of the embodiments (including the methods described herein) and can be contained on a variety of computer-readable storage media. The computer-readable storage media can be a non-transitory storage medium. Illustrative computer-readable storage media include, but are not limited to: (i) non-writable storage media (e.g., read-only memory devices within a computer such as CD-ROM disks readable by a CD-ROM drive, ROM chips or any type of solid-state nonvolatile semiconductor memory) on which information is permanently stored; and (ii) writable storage media (e.g., floppy disks within a diskette drive or hard-disk drive or any type of solid-state random-access semiconductor memory, flash memory) on which alterable information is stored.

Elements and aspects discussed for or in relation with a particular embodiment may be suitably combined with elements and aspects of other embodiments, unless explicitly stated otherwise.

## Claims

1. Method of packaging batches of a respiring produce (B), comprising the steps of:

   providing a batch of the produce,
   determining a respiration characteristic ($R_i$, $R_j$) of at least a portion (103) of the batch for at least a first substance (i) and a second substance (j), wherein the first and second substances are selected from a list comprising $O_2$ and $CO_2$, **characterised by** determining a ratio (H(i/j)) between the determined respiration characteristics for the first and second substances, and determining a desired transmission rate (TR) for a package (Pa, 259) of a packaging material (M, 123) containing an amount of produce from the batch (A, 257) and having a package atmosphere within the package,
   wherein the desired transmission rate is the transmission rate for the first substance or the second substance and is determined based on said ratio to control a concentration of one of the first and second substances in the package atmosphere,
   wherein the method further comprises repeating the above steps for a subsequent batch of the same produce and the desired transmission rate for the subsequent batch is the transmission rate for the other one of the first and second substances.

2. The method of claim 1, comprising providing a packaging material (M, 123), preferably a polymeric film, for packaging an amount of produce from the batch (A, 257) and providing one or more openings, e.g. microperforations, in the packaging material providing an open area (OA) configured to establish said desired transmission rate (TR), and wherein one or more openings may be made by laser perforation.

3. The method of any preceding claim, comprising if said ratio (H(i/j)) is at or below a particular value, providing a first set of one or more openings in the packaging material having a first number of openings and a first open area, and if said ratio is above said particular value, providing a second set of one or more one or more openings in the packaging material having a second number of openings and a second open area, wherein the number of openings and the total open area (OA) of the first and second sets of openings, respectively, are selected to provide the desired transmission rate (TR) to control a concentration of the first or second substance, respectively, in the package atmosphere.

4. The method of any preceding claim, wherein the ratio (H(i/j)) is the ratio H of $CO_2$ respiration [resp $CO_2$] and $O_2$ respiration [resp $O_2$] ; H($CO_2/O_2$) = [resp $CO_2$] / [resp $O_2$], and wherein in case of the method of claim 3 preferably said value is 4 or lower, e.g. 2 or lower, e.g. 1.5.

5. The method of any preceding claim, comprising determining the respiration characteristic ($R_i$, $R_j$) of one or more portions of the batch for the first substance and the second substance at plural temperatures, preferably three or more different temperatures, preferably such that two of the plural temperatures differ by at least 10 degrees Celsius.

6. The method of any preceding claim, wherein the method further comprises forming a package (Pa, 259) of an amount of the packaging material (M, 123) for containing an amount of produce from the batch (A, 257) and having a package atmosphere, wherein preferably the package contains the amount of produce from the batch.

7. The method of any preceding claim, comprising providing the package (Pa, 259) with a gas and/or a substance to modify the package atmosphere.

8. The method of any preceding claim, comprising determining a ratio (H(i/j)) between the determined respiration characteristics ($R_i$, $R_j$) for the first and second substances,
determining based on said ratio a desired transmission rate (TR) of a package (Pa, 259) of the packaging material (M, 123) containing an amount of produce from the batch (A, 257) and having a package atmosphere within the package wherein the desired transmission rate (TR) is determined to control a concentration of one of the first and second substances in the package atmosphere and
providing a user with a selection option to provide a first set of one or more openings in the packaging material having a first number of openings and a first open area, or
a second set of one or more one or more openings in the packaging material having a second number of openings and a second open area,
wherein the number of openings and the total open area (OA) of the first and second sets of openings, respectively, are selected to provide the determined transmission rate to control a concentration of the first or second substance, respectively, in the package atmosphere,
and providing the first or second set of openings in the packaging material depending on the selection option selected by the user.

9. System (100) configured for packaging batches of a respiring produce (B) according to any preceding claim, comprising a device (101) configured to determine a respiration characteristic ($R_i$, $R_j$) of at least a portion (P(B), 103) of a batch of respiring produce for at least a first substance and a second substance wherein the first and second substances are selected from a list comprising $O_2$ and $CO_2$,
a device (101, 115) configured to determine a ratio (H(i/j)) between the determined respiration characteristics for the first and second substances, and
a device (117) configured to determine a desired transmission rate (TR) for a package (Pa, 259) of a packaging material (M, 123) containing an amount of produce from the batch (A, 257) and having a package atmosphere within the package,
**characterised in that** the desired transmission rate is determined based on said ratio to control a concentration of one of the first and second substances in the package atmosphere and wherein for a subsequent batch of the same produce the desired transmission rate is determined based on said ratio to control a concentration of the other one of the first and second substances in the package atmosphere.

10. The system (100) of claim 9, configured to determine the respiration characteristic of one or more portions of the batch (P(B), 103) for the first substance and the second substance at plural temperatures, preferably three or more different temperatures, preferably such that two of the plural temperatures differ by at least 10 degrees Celsius, e.g. the system comprising one or more temperature controllable measuring volumes.

11. The system (100) of claim 9 or 10, comprising a device (119) configured to determine the open area (OA) of one or more openings to be made in a selected packaging material, preferably a polymeric film, for forming a package to package an amount of produce from the batch with said desired transmission rate.

12. The system (100) of any one of claims 9-11 comprising a perforator (121) configured to provide one or more openings in the packaging material having an open area to provide the packaging material (M, 123) with the desired transmission rate (TR).

13. The system (100) of claim 12 wherein the perforator (121) provides an energetic beam to perforate the packaging material (M, 123) and/or the packaging material comprises a polymeric film.

14. The system (100) of any one of claims 9-13 comprising a device (255) configured to form a package (Pa, 259) of an amount of the packaging material (123) for containing an amount of produce from the batch (A, 257) and having a package atmosphere.

15. The system (100) of any one of claims 9-14, comprising a fluorescence detector for at least one of the first and second substances, in particular oxygen.

**Patentansprüche**

1. Verfahren zum Verpacken von Chargen eines atmenden Naturprodukts (B), aufweisend die Schritte:

Bereitstellen einer Charge des Naturprodukts, Ermitteln eines Atmungskennwerts ($R_i$, $R_j$) zumindest eines Teils (103) der Charge für mindestens eine erste Substanz (i) und eine zweite Substanz (j), wobei die erste und zweite Substanz aus einer Liste gewählt sind, die $O_2$ und $CO_2$ aufweist,

**gekennzeichnet durch**

Ermitteln eines Verhältnisses (H(i/j)) zwischen den ermittelten Atmungskennwerten für die erste und zweite Substanz, und

Ermitteln einer gewünschten Durchlässigkeitsrate (TR) für eine Verpackungseinheit (Pa, 259) eines Verpackungsmaterials (M, 123), die eine Menge des Naturprodukts aus der Charge (A, 257) enthält, und mit einer Verpackungsatmosphäre im Innern der Verpackungseinheit, wobei die gewünschte Durchlässigkeitsrate die Durchlässigkeitsrate für die erste Substanz oder die zweite Substanz ist und auf Basis des Verhältnisses ermittelt wird, um eine Konzentration einer von der ersten und zweiten Substanz in der Verpackungsatmosphäre zu steuern, wobei das Verfahren ferner ein Wiederholen der obigen Schritte für eine folgende Charge des gleichen Naturprodukts aufweist und die gewünschte Durchlässigkeitsrate für die folgende Charge die Durchlässigkeitsrate für die andere von der ersten und zweiten Substanz ist.

2. Verfahren nach Anspruch 1, aufweisend:

Bereitstellen eines Verpackungsmaterials (M, 123), vorzugsweise einer Polymerfolie, zum Verpacken einer Menge des Naturprodukts aus der Charge (A, 257) und Bereitstellen eines oder mehrerer Löcher, z.B. Mikroperforationen, in dem Verpackungsmaterial, die eine Lochfläche (OA) bereitstellen, die konfiguriert ist, die gewünschte Durchlässigkeitsrate (TR) bereitzustellen, und wobei eines oder mehrere Löcher durch Laserperforation hergestellt werden können.

3. Verfahren nach einem der vorstehenden Ansprüche, aufweisend:

wenn das Verhältnis (H(i/j)) gleich oder kleiner als ein bestimmter Wert ist, Bereitstellen eines ersten Satzes von einem oder mehreren Löchern in dem Verpackungsmaterial, der eine erste Anzahl von Löchern und eine erste Lochfläche hat, und

wenn das Verhältnis größer als der bestimmte Wert ist, Bereitstellen eines zweiten Satzes von einem oder mehreren Löchern in dem Verpackungsmaterial, der eine zweite Anzahl von Löchern und eine zweite Lochfläche hat,

wobei die Anzahl von Löchern und die Gesamtlochfläche (OA) des ersten bzw. zweiten Satzes von Löchern gewählt sind, um die gewünschte Durchlässigkeitsrate (TR) bereitzustellen, um eine Konzentration der ersten bzw. zweiten Substanz in der Verpackungsatmosphäre zu steuern.

4. Verfahren nach einem der vorstehenden Ansprüche, wobei das Verhältnis (H(i/j)) das Verhältnis H einer $CO_2$-Atmung [resp $CO_2$] und $O_2$-Atmung [resp $O_2$] ist; H($CO_2$/$O_2$) = [resp $CO_2$]/(resp $O_2$], und wobei im Fall des Verfahrens von Anspruch 3 der Wert vorzugsweise 4 oder kleiner, z.B. 2 oder kleiner, z.B. 1,5 ist.

5. Verfahren nach einem der vorstehenden Ansprüche, aufweisend ein Ermitteln des Atmungskennwerts (Ri, Rj) eines oder mehrerer Teile der Charge für die erste Substanz und die zweite Substanz bei mehreren Temperaturen, vorzugsweise bei drei oder mehr unterschiedlichen Temperaturen, vorzugsweise derart, dass zwei der mehreren Temperaturen sich um mindestens 10 Grad Celsius unterscheiden.

6. Verfahren nach einem der vorstehenden Ansprüche, wobei das Verfahren ferner aufweist: Bilden einer Verpackungseinheit (Pa, 259) aus einer Menge des Verpackungsmaterials (M, 123) zur Aufnahme einer Menge des Naturprodukts aus der Charge (A, 257) und mit einer Verpackungsatmosphäre, wobei die Verpackungseinheit vorzugsweise die Menge des Naturprodukts aus der Charge aufnimmt.

7. Verfahren nach einem der vorstehenden Ansprüche, aufweisend ein Versehen der Verpackungseinheit (Pa, 259) mit einem Gas und/oder einer Substanz, um die Verpackungsatmosphäre zu ändern.

8. Verfahren nach einem der vorstehenden Ansprüche, aufweisend:

Ermitteln eines Verhältnisses (H(i/j)) zwischen den ermittelten Atmungskennwerten ($R_i$, $R_j$) für die erste und zweite Substanz, und

Ermitteln einer gewünschten Durchlässigkeitsrate (TR) einer Verpackungseinheit (Pa, 259) des Verpackungsmaterials (M, 123), die eine Menge des Naturprodukts aus der Charge (A, 257) enthält und mit einer Verpackungsatmosphäre in der Verpackungseinheit, auf Basis des Verhältnisses, wobei die gewünschte Durchlässigkeitsrate (TR) ermittelt wird, um eine Konzentration der ersten oder zweiten Substanz in der Verpackungsatmosphäre zu steuern, und

Versorgen eines Benutzers mit einer Auswahloption zur Bereitstellung

eines ersten Satzes von einem oder mehreren Löchern in dem Verpackungsmaterial, der eine erste Anzahl von Löchern und eine erste Lochfläche hat, oder

eines zweiten Satzes von einem oder mehreren Löchern in dem Verpackungsmaterial, der eine zweite Anzahl von Löchern und eine zweite Lochfläche hat,

wobei die Anzahl von Löchern und die Gesamtlochfläche (OA) des ersten bzw. zweiten Satzes von Löchern gewählt werden, um die ermittelte Durchlässigkeitsrate bereitzustellen, um eine Konzentration der ersten bzw. zweiten Substanz in der Verpackungsatmosphäre zu steuern, und

Bereitstellen des ersten oder zweiten Satzes von Löchern in dem Verpackungsmaterial in Abhängigkeit von der von dem Benutzer gewählten Auswahloption.

9. System (100) zum Verpacken von Chargen eines atmenden Naturprodukts (B) nach einem der vorstehenden Ansprüche, aufweisend:

eine Vorrichtung (101) zum Ermitteln eines Atmungskennwerts ($R_i$, $R_j$) zumindest eines Teils (P(B), 103) einer Charge eines atmenden Naturprodukts für mindestens eine erste Substanz und eine zweite Substanz, wobei die erste und zweite Substanz aus einer Liste gewählt sind, die $O_2$ und $CO_2$ aufweist,

eine Vorrichtung (101, 115) zum Ermitteln eines Verhältnisses (H(i/j)) zwischen den ermittelten Atmungskennwerten für die erste und zweite Substanz, und

eine Vorrichtung (117) zum Ermitteln einer gewünschten Durchlässigkeitsrate (TR) für eine Verpackungseinheit (Pa, 259) eines Verpackungsmaterials (M, 123), die eine Menge des Naturprodukts aus der Charge (A, 257) enthält, und mit einer Verpackungsatmosphäre in der Verpackungseinheit,

**dadurch gekennzeichnet, dass**

die gewünschte Durchlässigkeitsrate auf Basis des Verhältnisses ermittelt wird, um eine Konzentration einer von der ersten und zweiten Substanz in der Verpackungsatmosphäre zu steuern, und wobei für eine folgende Charge des gleichen Naturprodukts die gewünschte Durchlässigkeitsrate auf Basis des Verhältnisses ermittelt wird, um eine Konzentration der anderen von der ersten und zweiten Substanz zu steuern.

10. System (100) nach Anspruch 9, das konfiguriert ist, den Atmungskennwert eines oder mehrerer Teile der Charge (P(B), 103) für die erste Substanz und die zweite Substanz bei mehreren Temperaturen zu ermitteln, vorzugsweise bei drei oder mehr unterschiedlichen Temperaturen, vorzugsweise derart, dass zwei der mehreren Temperaturen sich um mindestens 10 Grad Celsius unterscheiden, wobei das System beispielsweise ein oder mehrere temperatursteuerbare Messvolumina aufweist.

11. System (100) nach Anspruch 9 oder 10, aufweisend eine Vorrichtung (119), die konfiguriert ist, die Lochfläche (OA) einer oder mehrerer Löcher zu ermitteln, die in einem gewählten Verpackungsmaterial, vorzugsweise einer Polymerfolie, zu bilden sind, um zum Verpacken einer Menge des Naturprodukts aus der Charge eine Verpackungseinheit mit der gewünschten Durchlässigkeitsrate zu bilden.

12. System (100) nach einem der Ansprüche 9 bis 11, aufweisend einen Perforator (121), der konfiguriert ist, in dem Verpackungsmaterial ein oder mehrere Löcher, die eine Lochfläche haben, zu bilden, um das Verpackungsmaterial (M, 123) mit der gewünschten Durchlässigkeitsrate (TR) zu versehen.

13. System (100) nach Anspruch 12, wobei der Perforator (121) einen Energiestrahl bereitstellt, um das Verpackungsmaterial (M, 123) zu perforieren, und/oder das Verpackungsmaterial eine Polymerfolie aufweist.

14. System (100) nach einem der Ansprüche 9 bis 13, aufweisend eine Vorrichtung (255), die konfiguriert ist, aus einer Menge des Verpackungsmaterials (123) eine Verpackungseinheit (Pa, 259) zur Aufnahme einer Menge des Naturprodukts aus der Charge (A, 257) und mit einer Verpackungsatmosphäre zu bilden.

15. System (100) nach einem der vorstehenden Ansprüche 9 bis 14, aufweisend einen Fluoreszenz-Detektor für die erste und/oder zweite Substanz, insbesondere für Sauerstoff.

**Revendications**

1. Procédé d'emballage de lots d'un produit respirant (B), comprenant les étapes de :

fourniture d'un lot du produit,
détermination d'une caractéristique de respiration ($R_i$, $R_j$) d'au moins une portion (103) du lot pour au moins une première substance (i) et une seconde substance (j), dans lequel les première et seconde substances sont sélectionnées dans une liste comprenant $O_2$ et $CO_2$,
**caractérisé par** la détermination d'un rapport (H(i/j)) entre les caractéristiques de respiration déterminées pour les première et seconde substances, et

la détermination d'une vitesse de transmission souhaitée (TR) pour un emballage (Pa, 259) d'un matériau d'emballage (M, 123) contenant une quantité d'un produit issu du lot (A, 257) et ayant une atmosphère d'emballage au sein de l'emballage,

dans lequel la vitesse de transmission souhaitée est la vitesse de transmission pour la première substance ou la seconde substance et est déterminée d'après ledit rapport pour réguler une concentration de l'une des première et seconde substances dans l'atmosphère d'emballage,

dans lequel le procédé comprend en outre la répétition des étapes ci-dessus pour un lot ultérieur du même produit et la vitesse de transmission souhaitée pour le lot ultérieur est la vitesse de transmission pour l'autre des première et seconde substances.

2. Procédé selon la revendication 1, comprenant la fourniture d'un matériau d'emballage (M, 123), de préférence un film polymérique, pour emballer une quantité d'un produit issu du lot (A, 257) et fournir une ou plusieurs ouvertures, par exemple, des microperforations, dans le matériau d'emballage fournissant une aire ouverte (OA) configurée pour établir ladite vitesse de transmission souhaitée (TR), et dans lequel une ou plusieurs ouvertures peuvent être pratiquées par perforation laser.

3. Procédé selon une quelconque revendication précédente, comprenant
si ledit rapport (H(i/j)) est à ou en dessous d'une valeur particulière, la fourniture d'un premier jeu d'une ou de plusieurs ouvertures dans le matériau d'emballage ayant un premier nombre d'ouvertures et une première aire ouverte, et
si ledit rapport est au-dessus de ladite valeur particulière, la fourniture d'un second jeu d'une ou de plusieurs ouvertures dans le matériau d'emballage ayant un second nombre d'ouvertures et une seconde aire ouverte,
dans lequel le nombre d'ouvertures et l'aire ouverte totale (OA) des premier et second jeux d'ouvertures, respectivement, sont sélectionnés pour fournir la vitesse de transmission souhaitée (TR) afin de réguler une concentration de la première ou de la seconde substance, respectivement, dans l'atmosphère d'emballage.

4. Procédé selon une quelconque revendication précédente, dans lequel le rapport (H(i/j)) est le rapport H entre une respiration de $CO_2$ [resp $CO_2$] et une respiration d'$O_2$ [resp $O_2$] ; H $(CO_2/O_2)$ [resp $CO_2$]/[resp $O_2$], et dans lequel dans le cas du procédé selon la revendication 3, de préférence ladite valeur est de 4 ou moins, par exemple de 2 ou moins, par exemple de 1,5.

5. Procédé selon une quelconque revendication précédente, comprenant la détermination de la caractéristique de respiration ($R_i$, $R_j$) d'une ou de plusieurs portions du lot pour la première substance et la seconde substance à plusieurs températures, de préférence trois températures différentes ou plus, de préférence de telle sorte que deux des plusieurs températures diffèrent d'au moins 10 degrés Celsius.

6. Procédé selon une quelconque revendication précédente, dans lequel le procédé comprend en outre la formation d'un emballage (Pa, 259) d'une quantité du matériau d'emballage (M, 123) pour contenir une quantité d'un produit issu du lot (A, 257) et ayant une atmosphère d'emballage, dans lequel de préférence l'emballage contient la quantité d'un produit issu du lot.

7. Procédé selon une quelconque revendication précédente, comprenant la fourniture de l'emballage (Pa, 259) avec un gaz et/ou une substance pour modifier l'atmosphère d'emballage.

8. Procédé selon une quelconque revendication précédente, comprenant
la détermination d'un rapport (H(i/j)) entre les caractéristiques de respiration déterminées ($R_i$, $R_j$) pour les première et seconde substances,
la détermination d'après ledit rapport d'une vitesse de transmission souhaitée (TR) d'un emballage (Pa, 259) du matériau d'emballage (M, 123) contenant une quantité d'un produit issu du lot (A, 257) et ayant une atmosphère d'emballage au sein de l'emballage, dans lequel la vitesse de transmission souhaitée (TR) est déterminée pour réguler une concentration de l'une des première et seconde substances dans l'atmosphère d'emballage et
la fourniture à un utilisateur d'une option de sélection pour fournir un premier jeu d'une ou de plusieurs ouvertures dans le matériau d'emballage ayant un premier nombre d'ouvertures et une première aire ouverte, ou
un second jeu d'une ou de plusieurs ouvertures dans le matériau d'emballage ayant un second nombre d'ouvertures et une seconde aire ouverte,
dans lequel le nombre d'ouvertures et l'aire ouverte totale (OA) des premier et second jeux d'ouvertures, respectivement, sont sélectionnés pour fournir la vitesse de transmission déterminée pour réguler une concentration de la première ou de la seconde substance, respectivement, dans l'atmosphère d'emballage,
et la fourniture du premier ou du second jeu d'ouvertures dans le matériau d'emballage en fonction de l'option de sélection sélectionnée par l'utilisateur.

9. Système (100) configuré pour emballer des lots d'un produit respirant (B) selon une quelconque revendication précédente,

comprenant un dispositif (101) configuré pour déterminer une caractéristique de respiration ($R_i$, $R_j$) d'au moins une portion (P(B), 103) d'un lot d'un produit respirant pour au moins une première substance et une seconde substance, dans lequel les première et seconde substances sont sélectionnées dans une liste comprenant $O_2$ et $CO_2$,

un dispositif (101, 115) configuré pour déterminer un rapport (H(i/j)) entre les caractéristiques de respiration déterminées pour les première et seconde substances,

et

un dispositif (117) configuré pour déterminer une vitesse de transmission souhaitée (TR) pour un emballage (Pa, 259) d'un matériau d'emballage (M, 123) contenant une quantité d'un produit issu du lot (A, 257) et ayant une atmosphère d'emballage au sein de l'emballage,

**caractérisé en ce que** la vitesse de transmission souhaitée est déterminée d'après ledit rapport pour réguler une concentration d'une des première et seconde substances dans l'atmosphère d'emballage, et dans lequel pour un lot ultérieur du même produit, la vitesse de transmission souhaitée est déterminée d'après ledit rapport pour réguler une concentration de l'autre des première et seconde substances dans l'atmosphère d'emballage.

**10.** Système (100) selon la revendication 9, configuré pour déterminer la caractéristique de respiration d'une ou de plusieurs portions du lot (P(B), 103) pour la première substance et la seconde substance à plusieurs températures, de préférence trois températures différentes ou plus, de préférence de telle sorte que deux des plusieurs températures diffèrent d'au moins 10 degrés Celsius, par exemple le système comprenant un ou plusieurs volumes de mesure réglables par température.

**11.** Système (100) selon la revendication 9 ou 10, comprenant un dispositif (119) configuré pour déterminer l'aire ouverte (OA) d'une ou de plusieurs ouvertures à pratiquer dans un matériau d'emballage sélectionné, de préférence un film polymérique, pour former un emballage en vue d'emballer une quantité d'un produit issu du lot avec ladite vitesse de transmission souhaitée.

**12.** Système (100) selon l'une quelconque des revendications 9 à 11, comprenant un perforateur (121) configuré pour pratiquer une ou plusieurs ouvertures dans le matériau d'emballage ayant une aire ouverte pour fournir le matériau d'emballage (M, 123) avec la vitesse de transmission souhaitée (TR).

**13.** Système (100) selon la revendication 12, dans lequel le perforateur (121) fournit un faisceau énergétique pour perforer le matériau d'emballage (M, 123) et/ou le matériau d'emballage comprend un film polymérique.

**14.** Système (100) selon l'une quelconque des revendications 9 à 13, comprenant un dispositif (255) configuré pour former un emballage (Pa, 259) d'une quantité du matériau d'emballage (123) pour contenir une quantité d'un produit issu du lot (A, 257) et ayant une atmosphère d'emballage.

**15.** Système (100) selon l'une quelconque des revendications 9 à 14, comprenant un détecteur de fluorescence pour au moins l'une des première et seconde substances, en particulier l'oxygène.

FIG. 1

**FIG. 2**

**FIG. 3**

**FIG. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AT 298212
- EP 0351115 A
- WO 9322207 A
- US 4842875 A
- US 6441340 B
- US 6730874 B
- WO 0212068 A
- US 2003029850 A
- US 7083837 B
- WO 2006063609 A
- FR 2873992
- US 20080152767 A
- WO 2009132663 A
- EP 1935787 A

**Non-patent literature cited in the description**

- **L. JACXSENS et al.** Validation of a systematic approach to design equilibrium modified atmosphere packages for fresh-cut produce. *Lebensm. Wiss. u. Technol,* 1999, vol. 32, 425-432
- **C. SANZ et al.** Quality of strawberries packed with perforated polypropylene. *J. Food Sci.,* 1999, vol. 64, 748-752
- **J.G. KIM et al.** Effect of initial oxygen concentration and film oxygen transmission rate on the quality of fresh-cut romaine lettuce. *J. Sci. Food. Agric.,* 2005, vol. 85, 1622-1630